# EUROPÄISCHE PATENTANMELDUNG

(11) **EP 2 230 005 A1**
(43) Veröffentlichungstag der Anmeldung: **22.09.2010**
(21) Anmeldenummer: 09155600.1
(22) Anmeldetag: 19.03.2009
(51) Int. Cl.: B01J 2/00, B05B 15/02, B05B 15/04, B05B 15/10

(54) **Betriebssichere Beschichtungsvorrichtung für pulverförmiges Material**

(71) Anmelder: Sika Technology AG, 6340 Baar (CH)
(72) Erfinder: Meier, Heinz, 8032 Zürich (CH); Bürge, Christian, 5503 Schafisheim (CH); Schnider, Beat, 6005 Luzern (CH)
(74) Vertreter: Sika Patent Attorneys

(57) **Zusammenfassung**

Die Erfindung betrifft eine Vorrichtung (1) zum Beschichten von pulverförmigem Material (2) mit mindestens einem flüssigen Zusatzmittel (3). Die Vorrichtung (1) umfasst eine Fördervorrichtung (4), welche eine Förderleitung (5) enthält, durch welche das pulverförmige Material (2) gefördert wird, sowie eine Einbringvorrichtung (6) zum Einbringen des flüssigen Zusatzmittels (3) in die Förderleitung (5) umfassend das pulverförmige Material (2) und weist eine Reinigungsvorrichtung (7) zum Reinigen der Einbringvorrichtung (6) auf. Die Einbringvorrichtung (6) umfasst eine Zuleitung (8) und mindestens zwei Düsen (9), wobei jeweils über mindestens eine Düse (9) das flüssige Zusatzmittel (3) in die Förderleitung (5) und zum pulverförmigen Material (2) einführbar ist.

Des Weiteren betrifft die Erfindung ein Verfahren zum Beschichten von pulverförmigem Material (2) mit mindestens einem flüssigen Zusatzmittel (3) sowie die Verwendung einer Vorrichtung (1) zum Beschichten von pulverförmigem Material (2) mit mindestens einem flüssigen Zusatzmittel (3).

## Beschreibung

### Technisches Gebiet

Die Erfindung geht aus von einer Vorrichtung zum Behandeln, insbesondere Beschichten, von pulverförmigem Material mit mindestens einem flüssigen Zusatzmittel. Die Vorrichtung umfasst eine Fördervorrichtung, welche mindestens eine Förderleitung enthält, durch welche das pulverförmige Material gefördert wird, und mindestens eine Einbringvorrichtung zum Einbringen des flüssigen Zusatzmittels in die mindestens eine Förderleitung nach dem Oberbegriff des ersten Anspruches.

Des Weiteren betrifft die Erfindung ein Verfahren zum Behandeln von pulverförmigem Material mit mindestens einem flüssigen Zusatzmittel sowie eine Verwendung einer Vorrichtung zum Behandeln von pulverförmigem Material mit mindestens einem flüssigen Zusatzmittel nach den Oberbegriffen der weiteren unabhängigen Ansprüche.

### Stand der Technik

Der Werkstoff Zement wird in der Regel aus Zementklinker gewonnen. Dabei wird der Zementklinker, das Vorprodukt aus dem Zementdrehrohrofen, zum Zementpulver gemahlen, dann mit Gips, der als Abbinderegler fungiert, vermischt, wobei durch den Mischvorgang das Endprodukt Zement entsteht. Der gewonnene Zement wird nach der Herstellung in Silos gelagert. Bei der Weiterverarbeitung zu Beton wird der Werkstoff Zement mit Zuschlagstoffen, chemischen Zusatzmitteln und Wasser vermengt. Durch die Zugabe der Zusatzmittel sollen die Eigenschaften des Betons in chemischer und/oder physikalischer Hinsicht verbessert werden. So können die Zusatzmittel beispielsweise die Fliesseigenschaft, die Viskosität, das Verdichtungsverhalten und das Abbindverhalten des Betons beeinflussen.
Die Zugabe von flüssigem Zusatzmittel während der Weiterverarbeitung, insbesondere der Förderung, ist schwierig, da die zur Herstellung des Betons benötigten pulverförmigen Materialien, insbesondere deren Staub, mit dem flüssigen Zusatzmittel reagieren können und durch Verschmutzung der Einbringvorrichtung das Einbringen des flüssigen Zusatzmittels beeinträchtigen. Insbesondere bei der pneumatischen Förderung der zur Herstellung des Betons benötigten pulverförmigen Materialien herrschen typischerweise hohe Staubkonzentrationen und/oder hohe Temperaturen, was der Bildung der erwähnten Verschmutzungen besonders zuträglich ist.
Ferner kann es durch das flüssige Zusatzmittel selbst, beispielsweise durch Ausfallen desselben oder durch darin enthaltene Verunreinigungen, zu Verschmutzung der Einbringvorrichtung und zu einer Behinderung des Einbringens des flüssigen Zusatzmittels kommen. Ein zuverlässiges und kontrollierbares Einbringen der flüssigen Zusatzmittel ist wichtig für eine gleichbleibende Qualität des finalen Produktes.

### Darstellung der Erfindung

Aufgabe der vorliegenden Erfindung ist es daher, bei einer Vorrichtung der eingangs genannten Art eine kontrollierte, zuverlässige und konstante Behandlung des pulverförmigen Materials mit flüssigem Zusatzmittel zu gewährleisten.

Erfindungsgemäss wird dies durch die Merkmale des ersten Anspruches erreicht.

Kern der Erfindung ist es also, dass die Vorrichtung 1 mindestens eine Reinigungsvorrichtung 7 zum Reinigen der Einbringvorrichtung 6 aufweist, sowie dass die Einbringvorrichtung 6 eine Zuleitung 8 und mindestens zwei Düsen 9 umfasst, wobei jeweils über mindestens eine Düse 9 das flüssige Zusatzmittel 3 in die Förderleitung 5 und zum pulverförmigen Material 2 einführbar ist.

Die Vorteile der Erfindung sind unter anderem darin zu sehen, dass durch die Reinigungsvorrichtung 7 die häufig anfallenden inneren 21 und äusseren 31 Verschmutzungen beseitigt werden können und/oder ihnen vorgebeugt wird und somit ein konstantes Behandeln des pulverförmigen Materials 2 mit flüssigem Zusatzmittel 3 gewährleistet werden kann.
Dadurch, dass die Vorrichtung mindestens zwei Düsen 9 umfasst, kann die Verringerung der Förderleistung des flüssigen Zusatzmittels 2 durch eine Verschmutzung und/oder Reinigung einer Düse durch eine weitere Düse kompensiert werden und dadurch ein zuverlässiges Behandeln des pulverförmigen Materials 2 mit flüssigem Zusatzmittel 3 gewährleistet werden.
Die Vorrichtung soll daher eine Abnahme der Förderleistung des flüssigen Zusatzmittels 2 durch Verschmutzungen der Fördervorrichtung verhindern und/oder beseitigen und/oder kompensieren.

Es ist besonders zweckmässig, wenn die Reinigungsvorrichtung 7 die Einbringvorrichtung 6 zeitlich permanent oder in regelmässigen Abständen reinigt, wodurch der Entstehung von Verschmutzungen vorgebeugt werden kann. Weiter zweckmässig zur Vorbeugung von Verschmutzungen ist, dass die Vorrichtung weiter Schutzvorrichtungen 13 für die Düsen 9 in der Förderleitung 5 aufweist.

Es ist weiter von Vorteil, dass mindestens eine der Düsen 9 in die Förderleitung 5 hinein und hinaus bewegbar angeordnet ist. Dies ist unter anderem der Vorbeugung von äusseren Verschmutzungen 31 zuträglich, da dadurch Düsen, insbesondere die Austrittsöffnung 16, vor dem Staub 20 aus pulverförmigem Material 2 geschützt werden. Weiter können dadurch Düsen ausserhalb der Förderleitung durch eine Reinigungsvorrichtung 7 gereinigt werden, was die Reinigungsumgebung verbessert. Weiter können dadurch bei Bedarf, beispielsweise um die Förderleistung des flüssigen Zusatzmittels 2 aufrechtzuerhalten oder zu ändern, zusätzliche Düsen in die Förderleitung 5 geführt werden oder Düsen daraus entfernt werden, während nicht verwendete Düsen ausserhalb der Förderleitung vor dem Staub geschützt werden.

Es ist weiter von Vorteil, dass mindestens zwei Düsen 9 der Einbringvorrichtung 6 auf einem beweglichen Formteil 15 angeordnet sind.

Falls eine Düse 9 verstopft ist und/oder gereinigt wird, kann das bewegliche Formteil 15 um eine Position bis zur nächsten Düse weitergeschaltet werden. Dadurch kann die Totzeit ohne Förderung stark verkürzt werden und die Förderung des flüssigen Zusatzmittels 3 bleibt gewährleistet, da die Möglichkeit des Rückgriffs auf weitere Düsen des beweglichen Formteils besteht.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnungen

Im Folgenden werden anhand der Zeichnungen Ausführungsbeispiele der Erfindung näher erläutert. Gleiche Elemente sind in den verschiedenen Figuren mit den gleichen Bezugszeichen versehen. Die Strömungsrichtung der Medien ist mit Pfeilen angegeben.

Es zeigen:
Fig. 1 eine schematische Darstellung eines Ausführungsbeispiels;
Fig. 2 a - b seitliche Ansichten von möglichen beweglichen Formteilen;
Fig. 3 a - c Ansichten von möglichen Düsen mit Schutzvorrichtung;
Fig. 4 a - b Ansichten einer möglichen Düse mit Reinigungsvorrichtung und Schutzvorrichtung;
Fig. 5 Ansicht einer möglichen Düse mit einer möglichen Reinigungsvorrichtung;
Fig. 6 eine weitere schematische Darstellung eines Ausführungsbeispiels.

Es sind nur die für das unmittelbare Verständnis der Erfindung wesentlichen Elemente gezeigt.

### Wege zur Ausführung der Erfindung

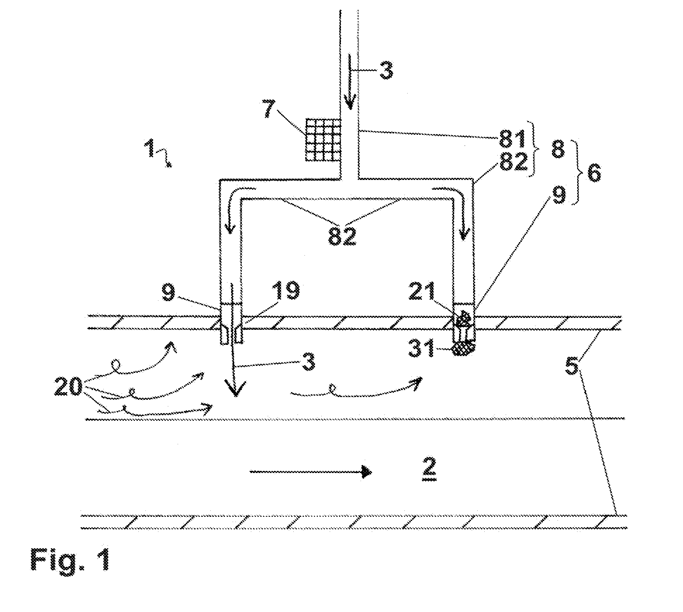

In Fig. 1 ist der schematische Aufbau einer Vorrichtung 1 zum Behandeln, insbesondere Beschichten, von pulverförmigem Material 2 mit mindestens einem flüssigen Zusatzmittel 3 gezeigt. Die Vorrichtung 1 umfasst eine Fördervorrichtung 4, welche mindestens eine Förderleitung 5 enthält, durch welche das pulverförmige Material 2 gefördert wird, sowie mindestens eine Einbringvorrichtung 6 zum Einbringen des flüssigen Zusatzmittels 3 in die mindestens eine Förderleitung umfassend das pulverförmige Material 2. Die Vorrichtung 1 weist mindestens eine Reinigungsvorrichtung 7 zum Reinigen der Einbringvorrichtung 6 auf. Die Einbringvorrichtung 6 umfasst eine Zuleitung 8 und mindestens zwei Düsen 9, wobei jeweils über mindestens eine Düse 9 das flüssige Zusatzmittel 3 in die Förderleitung 5 und zum pulverförmigen Material 2 einführbar ist. Unter "pulverförmigem Material" wird in diesem Dokument ein Material verstanden, das man durch Zerteilung eines trockenen festen Stoffs, beispielsweise durch Zerkleinern, Zerreiben, Zerstoßen oder Mahlen in Mühlen, oder durch Sprühtrocknung erhält.

Nach der Korngröße ist eine grobe Einteilung der pulverförmigen Materialien möglich; eine genauere Klassifizierung pulverförmiger Materialien erfolgt beispielsweise über ihre Schüttdichte und durch Siebanalyse. Vorteilhafterweise weisen die pulverförmigen Materialien, insbesondere beim pneumatischen Transport, ein Fliessverhalten auf, das an Flüssigkeiten erinnert. Typischerweise haben die pulverförmigen Materialien 2 eine Teilchengrösse von im Wesentlichen 1 - 200 µm, bevorzugt 3 - 30 µm und/oder eine Feinheit nach Blaine von 2000 - 8000 cm²/g, bevorzugt 3000 - 6000 cm²/g.
Als pulverförmiges Material 2 eignen sich nichthydraulisches, hydraulisches und latent hydraulisches pulverförmiges Material aller Art, vorzugsweise solches, welche für die Bauindustrie in grosser Menge benötigt wird.
Weiter sind als pulverförmige Materialien 2 prinzipiell alle Stoffe, die für die Herstellung von Beton, Mörtel oder Gips verwendet werden, geeignet, insbesondere Zementpartikel. Es können auch Stoffe oder Zusatzstoffe, wie zum Beispiel Silikafume, Flugasche, Leichtzuschlag, Schlacke, Fasermaterialien, zum Beispiel organische wie Polypropylenfasern, usw. oder anorganische wie Basalt, Glas usw. verwendet werden.
Es ist zu betonen, dass es prinzipiell möglich ist, alle Stoffe, die für die Herstellung von Beton, Mörtel oder Gips verwendet werden, mit flüssigem Zusatzmittel 3 zu behandeln, insbesondere zu beschichten. Die Behandlung des pulverförmigen Materials kann vorteilhafterweise dort erfolgen, wo die pulverförmigen Materialien pneumatisch gefördert werden. Das heisst der Behandlungsprozess muss nicht notwendigerweise bei der Herstellung des Betons, Mörtels oder Gips erfolgen. Die Grundstoffe können also am Ort ihrer Herstellung bereits behandelt werden. So können beispielsweise die Zementpartikel direkt am Ende des Zementherstellungsprozesses behandelt werden.
Das pulverförmige Material 2 umfasst bevorzugt mindestens ein Bindemittel, welches vorzugsweise ausgewählt ist aus der Gruppe bestehend aus Zement, Mörtel, Gips, Silikafume, Flugasche, Schlacke und Hüttensand oder eine Mischung davon. Insbesondere bevorzugt ist das pulverförmige Material 2 Zement.

Als flüssige Zusatzmittel 3 sind typischerweise Stoffe geeignet, welche zerstäubt (Aerosol) und/oder zertropft (Tropfen) und/oder verdampft (Dampf) werden können und eine Viskosität von 1 - 500 mPa*s aufweisen.
Beispielsweise werden hier nicht abschliessend einige flüssige Zusatzmittel, aus deren Namen meist die Wirkung hervorgeht, aufgezählt: Betonverflüssiger, Fliessmittel, Luftporenbilder, (Reaktions-)Verzögerer, Beschleuniger, wie Erstarrungs- und Erhärtungsbeschleuniger, Stabilisierer, Chromatreduzierer, Einpresshilfen, Schaumbildner, Luftporenbildner, Dichtungsmittel, Korrosionsinhibitor und Recyclinghilfen.
Das mindestens eine flüssige Zusatzmittel 3 ist typischerweise ausgewählt aus der Gruppe bestehend aus Dispergiermittel, Verflüssiger, Fliessmittel, Verzögerer, Beschleuniger, Stabilisierer, Schwindreduzierer, Luftporenbildner und Korrosionsinhibitor oder eine Mischung davon.

Es ist insbesondere vorteilhaft, als flüssiges Zusatzmittel einen Hochleistungsbetonverflüssiger, vorzugsweise das Produkt ViscoCrete® der Firma Sika, zu verwenden. Dieser Hochleistungsbetonverflüssiger vermindert den Wasseranspruch von Zement und verbessert die Verarbeitbarkeit des Betons.

Die Fördervorrichtung 4, welche mindestens eine Förderleitung 5 enthält, durch welche das pulverförmige Material 2 gefördert wird, ist typischerweise eine Fördervorrichtung in der Bauindustrie.
Eine solche Fördervorrichtung 4 dient beispielsweise zum Transport von der Produktion des pulverförmigen Materials 2 zu einem Zwischenlager, wie einem Zwischensilo, zu einem mobilen Transportmittel, wie beispielsweise einem LKW oder Eisenbahnwagon, oder einem Endlager. Der Transport des pulverförmigem Material 2 in einer Förderleitung 5 erfolgt in der Regel mittels Becherwerken, Förderbändern, pneumatisch oder in sogenannten Luftförderrinnen, auch "air slides" genannt. Solche Luftförderrinnen sind beispielsweise bei der Firma Mahr GmbH, Deutschland, kommerziell erhältlich. Luftförderrinnen bestehen typischerweise aus rechteckigen Stahlrohren mit einer Breite von 10 - 100 cm und einer Höhe von 10 - 100 cm, das pulverförmige Material 2 weist während dem Fördern darin eine Füllhöhe von typischerweise ¼ - ¾ des für das pulverförmige Material vorgesehenen Bereichs auf. Das Bewegen des pulverförmigen Materials 2 in einer Luftförderrinne beruht auf dem Fluidisieren des pulverförmigen Materials mittels Luft, sowie dem Schrägstellen der Rinne von 5 bis 10°, was zusammen mit der kinetischen Energie, welche das pulverförmige Material beim Eintreten in die Luftförderrinne mitbringt, eine Bewegung des pulverförmigen Materials ermöglicht.
Das Fluidisieren geschieht mittels Durchströmen mit Luft von unten durch das auf einem perforierten Untergrund befindlichem pulverförmigen Material, wodurch die Teilchen des pulverförmigen Materials innerhalb der entstehenden Wirbelschicht in einer ständigen Auf- und Abbewegung bleiben und so gewissermaßen in der Schwebe bleiben.

Die Trennung von Fluidisierluft und dem pulverförmigen Material erfolgt durch ein Trenngewebe aus Kunststoff- oder Glasfasern, wobei die Fluidisierluft das Gewebe passieren kann, das zu fördernde pulverförmige Material 2 jedoch nicht.
In der Förderleitung 5 herrschen oft Temperaturen von bis zu 120 °C, weiter bildet sich über dem pulverförmigen Material 2 Staub 20 aus pulverförmigem Material.
Unter dem Begriff "Staub" wird im vorliegenden Dokument die unerwünschte disperse Verteilungen fester Stoffe, insbesondere von pulverförmigem Material 2, in Gasen verstanden, entstanden durch mechanische Prozesse oder durch Aufwirbelung, insbesondere durch den Transport in der Förderleitung 5, wobei der feste Stoff in die Umgebungsluft innerhalb der Förderleitung 5 eindispergiert wird
Vorzugsweise ist die Förderleitung 5 eine Luftförderrinne.
Typischerweise wird das pulverförmige Material 2 bei einer konstanten Geschwindigkeit von ca. 0.5 - 10 m/s durch die Förderleitung 5 transportiert.

Die Einbringvorrichtung 6 zum Einbringen des flüssigen Zusatzmittels 3 in die mindestens eine Förderleitung 5 umfasst eine Zuleitung 8 und mindestens zwei Düsen 9. Über mindestens eine Düse ist das flüssige Zusatzmittel 3 in die Förderleitung 5 und zum pulverförmigen Material 2 einführbar.
Das flüssige Zusatzmittel kann beispielsweise zerstäubt und/oder zertropft und/oder verdampft werden. Durch die unterschiedliche Konsistenz kann die Beschichtungsdicke des pulverförmigen Materials mit dem flüssigen Zusatzmittel eingestellt werden.
Über die Zuleitung 8 wird typischerweise bei einem Druck von 1 - 15 bar, bevorzugt 3 - 7 bar das flüssige Zusatzmittel 3 zu den mindestens zwei Düsen 9 geleitet. Typischerweise ist der Druck der Zuleitung grösser oder gleich, insbesondere grösser als der Nenndruck der Düsen. Vorteilhafterweise weist die Einbringvorrichtung 6 eine Pumpe 10 zum Fördern des flüssigen Zusatzmittels 3 auf, sowie mindestens ein Ventil 27 vor mindestens einer Düse 9. Typischerweise besteht die Zuleitung 8 aus einer Hauptzuleitung 81 sowie Nebenzuleitungen 82, welche die Hauptzuleitung 81 mit den Düsen 9 verbinden.

Geeignete Düsen 9 erlauben unter anderem das Versprühen von flüssigen Zusatzmittel 3 bei Drücken von 1 - 30 bar, bevorzugt 3 - 7 bar. Typischerweise handelt es sich um Flachstrahldüsen, Nebeldüsen oder Zweistoffdüsen, insbesondere um Flachstrahldüsen.
Nebeldüsen sind dahingehend von Vorteil, dass sie unter Druck stehende Flüssigkeiten in feinste Tropfen mit großer spezifischer Oberfläche zerstäuben können.
Zweistoffdüsen zeichnen sich durch eine sehr feine Zerstäubung durch das Vermischen von Flüssigkeiten mit Luft oder Gas aus. Weiter können sie verschiedene Sprühbilder, wie beispielsweise Flachstrahl, Hohlkegel oder Vollkegel-Sprühbilder erzeugen.
Flachstrahldüsen zeichnen sich durch eine gleichmäßige Flüssigkeits- und Druckverteilung aus. Weiter erlauben sie eine grosse Variabilität bei der Wahl des Sprühwinkels. Besonders geeignete Düsen weisen einen Sprühwinkel von 30° - 120° auf. Je nach Gestaltung der Austrittsöffnung 16 der Düse ist eine elliptische oder rechteckförmige Aufprallfläche möglich. Flachstrahldüsen sind preiswert und erlauben durch eine definierte und gut regulierbare Aufprallfläche das gezielte Behandeln des pulverförmigen Materials 2 mit dem flüssigen Zusatzmittel 3. Dies ist dahingehend von Vorteil, dass dadurch der Kontakt des flüssigen Zusatzmittels 3 mit der Förderleitung 5, insbesondere den Wänden und, falls es sich um eine Luftförderrinne handelt, dem Trenngewebe, vermieden werden kann. Dies verringert die Gefahr einer Blockierung der Förderung des pulverförmigen Materials 2 dadurch, dass entweder das Fluidisieren des pulverförmigen Materials 2 eingeschränkt wird oder das pulverförmige Material sich an den Wänden festsetzt und verklumpt.
Typischerweise weisen die mindestens zwei Düsen eine Düsenbohrung 161 von 0.1 - 1 mm auf.

Die Düsen 9 sind typischerweise so an der Förderleitung 5 angeordnet, dass das flüssigen Zusatzmittels 3 möglichst gleichmässig mit einem möglichst grossen Teil des pulverförmigen Material 2 in Kontakt gebracht werden kann. Typischerweise sind die Düsen an der dem pulverförmigen Material 2 entgegengesetzten Wand der Förderleitung angeordnet. Es ist weiter von Vorteil, wenn die Düsen, insbesondere die Austrittsöffnung 16, in der Förderleitung 5 einen möglichst grossen Abstand zum pulverförmigen Material 2 aufweisen. Dies erlaubt einerseits eine grössere Flexibilität beim Behandeln mit dem flüssigem Zusatzmittel 3, andererseits sind die Düsen dadurch weniger dem Staub 20 des pulverförmigen Materials 2 ausgesetzt, wodurch die Möglichkeit der äusseren Verschmutzung 31 der Düsen reduziert wird.

Der Abstand zwischen der Austrittsöffnung 16 der Düse 9 und dem pulverförmigen Material 2 ist typischerweise abhängig vom der Füllhöhe des pulverförmigen Materials 2, der Form des Querschnitts der Förderleitung und dem Sprühwinkel der Düse.
Es ist weiter von Vorteil, wenn mindestens eine der Düsen 9 in die Förderleitung 5 hinein und hinaus bewegbar angeordnet ist. Dadurch können Düsen, insbesondere die Austrittsöffnung 16, vor dem Staub 20 des pulverförmigen Material 2 geschützt werden. Weiter können dadurch Düsen ausserhalb der Förderleitung 5 durch eine Reinigungsvorrichtung 7 gereinigt werden, was die Reinigungsumgebung verbessert. Weiter können dadurch bei Bedarf, beispielsweise um die Förderleistung des flüssigen Zusatzmittels 3 aufrechtzuerhalten oder zu ändern, zusätzliche Düsen in die Förderleitung 5 geführt werden oder Düsen daraus entfernt werden. Nicht verwendete Düsen können so ausserhalb der Förderleitung vor dem Staub 20 aus pulverförmigem Material 2 geschützt werden.
Vorzugsweise ist die Bewegung der mindestens einen Düse in die Förderleitung 5 hinein oder hinaus durch ein Regelsystem 11 geregelt.
Es kann weiter von Vorteil sein, dass die Einbringvorrichtung 6 mindestens drei Düsen umfasst.

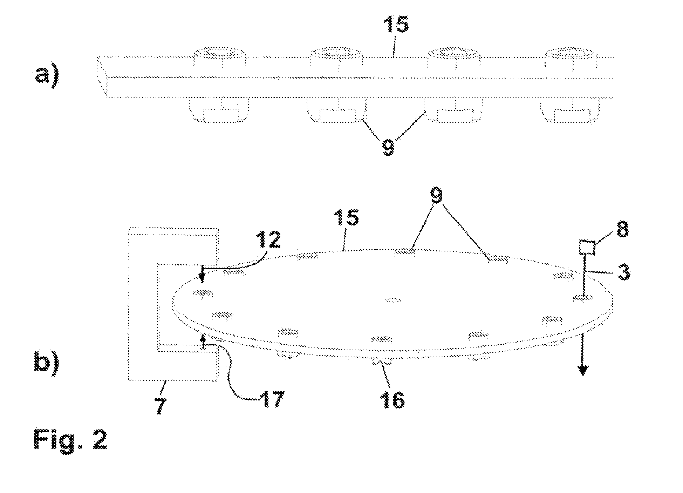

Es ist weiter von Vorteil, falls mindestens zwei Düsen 9 der Einbringvorrichtung 6 auf einem beweglichen Formteil 15 angeordnet sind, wobei das bewegliche Formteil 15 vorzugsweise rund, oval oder eckig ist.
Das bewegliche Formteil 15 ist typischerweise ein Flachprofil oder eine Scheibe, worauf mehrere Düsen 9 montiert sind, wie in Figur 2a und 2b gezeigt. Das bewegliche Formteil 15 ist typischerweise so an der Förderleitung 5 angeordnet, dass Düsen, welche kein flüssiges Zusatzmittel 3 fördern, vor dem Staub 20 aus pulverförmigem Material geschützt sind. Dies kann beispielsweise dadurch erreicht werden, dass das bewegliche Formteil an der Aussenseite der Förderleitung angebracht ist und jene Düsen, welche flüssiges Zusatzmittel 3 fördern, über eine Öffnung 19 in der Förderleitung in die Förderleitung bewegt werden und flüssiges Zusatzmittel 3 auf das pulverförmige Material 2 sprühen, während sich die Düsen, welche kein flüssiges Zusatzmittel fördern, ausserhalb der Förderleitung 5 befinden. Es ist auch möglich, dass das bewegliche Formteil an der Innenseite der Förderleitung angebracht ist und eine Schutzvorrichtung 13, typischerweise eine Abdeckung, jene Düsen, welche kein flüssiges Zusatzmittel fördern, schützt.
Falls eine Düse 9 durch eine Verschmutzung verstopft ist und/oder gereinigt wird, kann das bewegliche Formteil 15 um eine Position bis zur nächsten Düse weitergeschaltet werden. Dadurch kann die Totzeit ohne Förderung des flüssigen Zusatzmittels 3 stark verkürzt werden. Vorzugsweise ist das Weiterschalten durch ein Regelsystem 11 regelbar.
Mittels geeigneter Abdichtungen kann dafür gesorgt werden, dass während des Wechsels von einer zur nächsten Düse kein flüssiges Zusatzmittel 3 aus den Düsen austreten und kein Staub 20 aus pulverförmigem Material mit Düsen in Kontakt kommt, welche nicht in Gebrauch sind.
Ein weiterer Vorteil des beweglichen Formteils 15 ist auch, dass im Falle einer Verstopfung einer Düse die Förderung des flüssigen Zusatzmittels 3 gewährleistet bleibt, da die Möglichkeit des Rückgriffs auf weitere Düsen des beweglichen Formteils besteht.
Die Düsen 9 können aber auch direkt in das bewegliche Formteil 15 hineingearbeitet sein. Diese Bauweise würde deutliche Kostenersparnisse bringen und hätte Vorteile beim Abdichten der Düsen zur Verhinderung des Austretens von flüssigem Zusatzmittel 3 aus den Düsen während dem Wechsel von einer zur nächsten Düse.
Es kann weiter von Vorteil sein, wenn die Vorrichtung 1 mehrere, insbesondere drei oder mehr, bewegliche Formteile 15 aufweist.
Vorzugsweise weist die Zuleitung 8 vor jedem beweglichen Formteil ein Ventil 27 und/oder ein Mittel 25 zur Bestimmung der Durchflussrate **FI_{Düse}** des flüssigen Zusatzmittels 3 von der fördernden Düse des beweglichen Formteils 15 auf. Durch das Ventil 27 kann beispielsweise bei Bedarf ein bewegliches Formteil 15 zu- oder abgeschaltet werden und das Mittel 25 zur Bestimmung der Durchflussrate **FI_{Düse}** erlaubt beispielsweise die Erkennung einer Verschmutzung der fördernden Düse, worauf beispielsweise ein Weiterschalten und/oder eine Reinigung der verschmutzen Düse veranlasst werden kann.

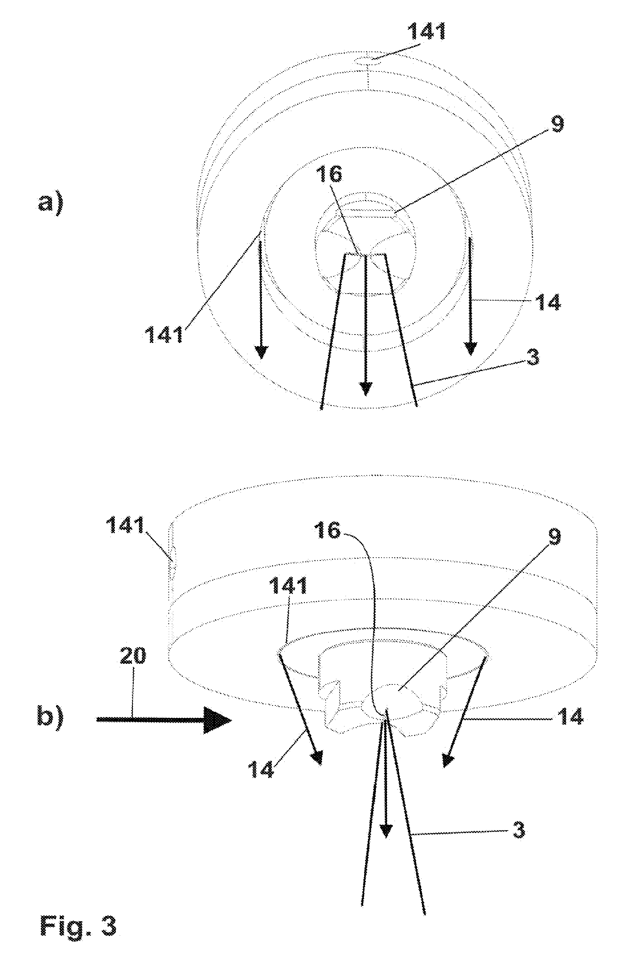

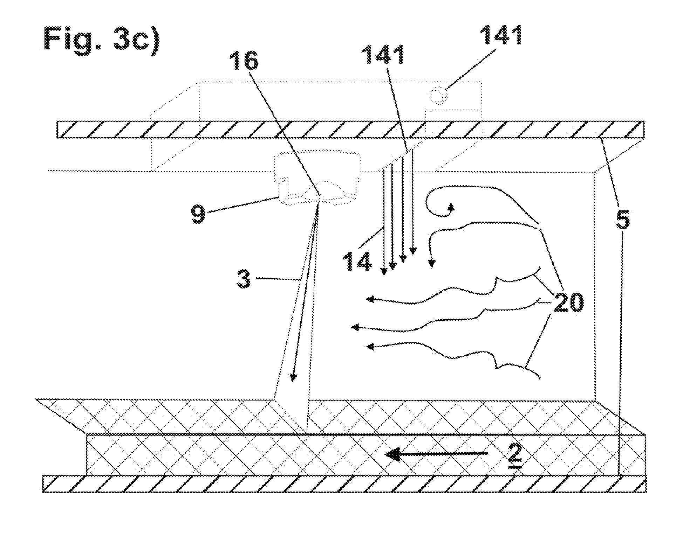

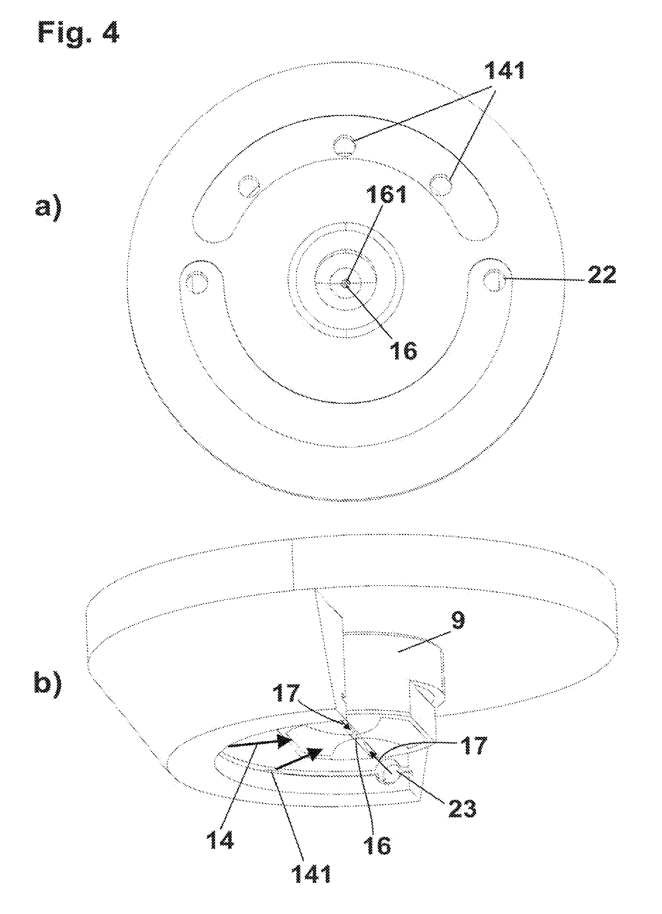

Mindestens eine der Düsen 9 der vorhergehend erwähnten Vorrichtung 1 kann eine Schutzvorrichtung 13 aufweisen, wobei die Schutzvorrichtung 13 in der Förderleitung 5 angeordnet ist. Diese Schutzvorrichtung dient insbesondere dazu, die Düse, insbesondere die Austrittsöffnung 16, vor dem Staub 20 aus pulverförmigem Material 2 zu schützen. Bei der Schutzvorrichtung 13 handelt es sich typischerweise um eine Abdeckung oder einen Luftvorhang 14, insbesondere um einen Luftvorhang.
Es ist weiter von Vorteil, wenn die Schutzvorrichtung 13 durch ein Regelsystem 11 regelbar ist.
Eine Abdeckung schirmt eine Düse, insbesondere die Austrittsöffnung 16, typischerweise im Wesentlichen vollständig vom Staub 20 ab und wird insbesondere für Düsen verwendet, die nicht in Gebrauch sind. Diese Lösung ist einfach, effektiv und kostengünstig.
Ein Luftvorhang 14 kann eine Düse 9, insbesondere die Austrittsöffnung 16, teilweise umgeben oder vollständig umgeben, wie beispielsweise in Figur 4b gezeigt. Weiter kann der Luftvorhang 14 im Wesentlichen parallel, wie beispielsweise in Figur 3c, konzentrisch, wie beispielsweise in Figur 3a, konisch, wie beispielsweise in Figur 3b, oder orthogonal, wie beispielsweise in Figur 4b, zur Achse der Austrittsrichtung des flüssigen Zusatzmittels 3 aus der Düse angeordnet sein.
Figur 4a zeigt unter anderem den inneren Teil einer Düse 9 mit der Düsenbohrung 161 sowie dem inneren Teil der Austrittsöffnung 16. Um die Düsenbohrung 161 sind Bohrungen der Ausblasvorrichtung 141 des Luftvorhangs 14 sowie Bohrungen für die Druckluftzuleitung 22 zur Reinigung der Düse angeordnet. In Figur 4b ist die Austrittsöffnung 16 sichtbar. Durch die Ausblasvorrichtung 141 wird im Wesentlichen orthogonal zur Achse der Austrittsrichtung des flüssigen Zusatzmittels 3 ein Luftvorhang 14 gebildet.
Figur 3a zeigt eine Ausblasvorrichtung 141, welche einen Luftvorhang 14 mit seiner Achse im Wesentlichen parallel zur Achse der Austrittsrichtung des flüssigen Zusatzmittels 3 bildet.
Figur 3b zeigt eine Ausblasvorrichtung 141, welche einen Luftvorhang 14 im Wesentlichen konisch zur Achse der Austrittsrichtung des flüssigen Zusatzmittels 3 bildet. Eine solche Orientierung des Luftvorhangs ist dahingehend von Vorteil, dass die Austrittsöffnung 16 der Düse von allen Seiten vor dem Staub 20 geschützt ist.
Figur 3c zeigt eine Ausblasvorrichtung 141, welche einen Luftvorhang mit seiner Achse im Wesentlichen parallel zur Achse der Austrittsrichtung des flüssigen Zusatzmittels 3 bildet und in Transportrichtung des pulverförmigen Materials 2 vor der Düse angeordnet ist.
Ein Luftvorhang 14 verlässt die die Ausblasvorrichtung 141 mit einem Druck von typischerweise 0.1 - 1 bar.

Die Vorrichtung 1 weist mindestens eine Reinigungsvorrichtung 7 zum Reinigen der Einbringvorrichtung 6 auf. Die Reinigungsvorrichtung 7 kann ein Mittel 12 zum Reinigen der Einbringvorrichtung 6 umfassen, welches ausgewählt ist aus der Gruppe bestehend aus Sieb, Lösungsmittel, Druckluft, mechanisches Werkzeug und Ultraschall, insbesondere Druckluft.
Weiter kann die Reinigungsvorrichtung 7 Teile oder die ganze Einbringvorrichtung 6 bei Bedarf und/oder zeitlich permanent oder in regelmässigen Abständen reinigen und es kann vorteilhaft sein, wenn die Reinigungsvorrichtung 7 durch ein Regelsystem 11 regelbar ist.

Die Reinigungsvorrichtung 7 kann weiter innerhalb oder ausserhalb der Förderleitung 5 angeordnet sein
Solche Mittel 12 können für die Reinigung der Zuleitung 8 und/oder der Düsen 9 verwendet werden.

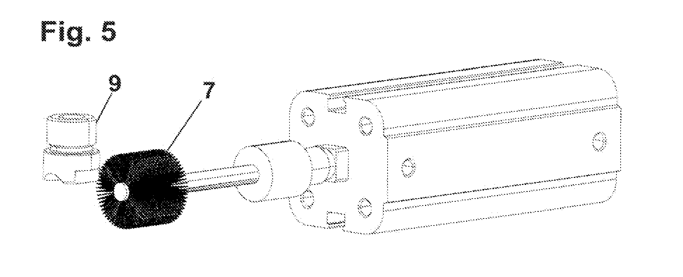

Typische Verschmutzungen sind innere Verschmutzungen 21 und äussere Verschmutzungen 31. Unter innerer Verschmutzung 21 werden im vorliegenden Dokument Verschmutzungen verstanden, welche sich in der Zuleitung 8 oder innerhalb der Düse 9, typischerweise in der Düsenbohrung 161, befinden. Innere Verschmutzungen 21 sind vor allem bedingt durch Verunreinigungen im flüssigen Zusatzmittel 3 oder durch ausgefallenes flüssiges Zusatzmittel. Solche innere Verschmutzungen können die Hauptzuleitung 81 verstopfen, und somit den Zufluss zu allen Düsen stören, die Nebenzuleitungen 82 oder die Düsen 9 selbst im Innern verstopfen.
Unter äusserer Verschmutzung 31 werden im vorliegenden Dokument Verschmutzungen verstanden, welche sich am äusseren Teil der Düse, insbesondere an der Austrittsöffnung 16, befinden, welcher mit dem Staub 20 aus pulverförmigem Material 2 in Kontakt kommt. Solche äusseren Verschmutzungen 31 entstehen typischerweise durch Staubablagerungen und insbesondere durch Ansammlungen, typischerweise Tropfen, von flüssigem Zusatzmittel an der Düse, welche durch den Staub 20 innert kurzer Zeit zu Verklumpungen führen, welche die Düse äusserlich verstopfen können.
Mit Hilfe eines Siebes oder Filters, typischerweise aus Metall oder Kunststoff, könnten Verstopfungen durch innere Verschmutzungen 21 verhindert werden. Natürlich ist bei der Auswahl der Maschenweite der Viskosität des flüssigen Zusatzmittels 3 sowie der Grösse der Austrittsöffnung 16 der Düse Rechnung zu tragen.
Ein weiteres Mittel 12 zur Reinigung der Einbringvorrichtung 6 ist Druckluft 17, welche durch die Einbringvorrichtung 6 gepumpt wird. Dies kann periodisch geschehen, beispielsweise um Verstopfungen vorzubeugen, oder bei aktuellen Verstopfungen. So könnte beispielsweise durch die Zuleitung 8 wiederkehrend 10 Sekunden flüssiges Zusatzmittel 3 gefördert werden und danach 1 Sekunde lang Druckluft 17. Das Schalten der dazu notwendigen Ventile 27 ist beispielsweise mittels einem spannungslos offenen und einem spannungslos geschlossenen Ventil einfach zu bewerkstelligen. Die Druckluft verlässt die Zuleitung 8 typischerweise durch die Düsen 9. Weiter kann Druckluft durch die gesamte Zuleitung 8 oder nur durch bestimmte Bereiche geleitet werden, wie beispielsweise den Bereich vor einer Düse 9. Im letzteren Fall könnte eine von Innen durch eine innere Verschmutzung 21 verstopfte Düse spezifisch mit Druckluft 17 ausgeblasen werden. Die Düse kann sich dabei innerhalb oder ausserhalb der Förderleitung 5 befinden. Durch ein Ausblasen der Düse ausserhalb der Förderleitung würde der Transport des pulverförmigen Materials 2 nicht gestört.
In Figur 2 b ist eine Reinigungsvorrichtung 7 für die Düsen 9 eines beweglichen Formteils 15 gezeigt, welche mit Druckluft 17 Düsen 9, welche sich ausserhalb der Förderleitung 5 befinden, reinigt. Durch die gezeigte Reinigungsvorrichtung können sowohl innere 21 als auch äussere 31 Verschmutzungen beseitigt werden. Die gezeigte Reinigungsvorrichtung 7 könnte auch verwendet werden, um mittels Druckluft 17 zu prüfen, ob die die Düse frei von Verschmutzungen ist, insbesondere ob die Reinigung erfolgreich war, wodurch Druckluft 17 ungehindert durch die Düse gelangen kann.
In den Figuren 4a und 4b ist unter anderem eine Düse 9 gezeigt, neben der eine Reinigungsvorrichtung 7 angeordnet ist. Durch die Druckluftzuleitung 22 wird die Druckluft 17 zugeführt und tritt durch die Druckluftaustrittsöffnung 23 aus, wobei die Druckluft 17 auf die Austrittsöffnung 16 geleitet wird, um diese von äusseren Verschmutzungen 31 zu reinigen. Diese Reinigung mittels Druckluft 17 kann sowohl innerhalb als auch ausserhalb der Förderleitung 5 stattfinden.
Bei dem Mittel 12 kann es sich weiter um ein Mittel zur mechanischen Reinigung, beispielsweise Ultraschall oder eine Bürste handeln, wie in Figur 5 gezeigt, welche innerhalb oder ausserhalb der Förderleitung 5 angeordnet sein kann.
Bei dem Mittel 12 kann es sich auch um Wasser, Detergenzien, Lösungsmittel oder Mischungen handeln. So kann beispielsweise die Düse, insbesondere die Austrittsöffnung 16 und/oder die Düsenbohrung 161, ausserhalb der Förderleitung durch Wasser, Detergenzien, Lösungsmittel oder Mischungen davon gereinigt werden, welche innere 21 und äussere 31 Verschmutzungen beseitigen.
Es kann selbstverständlich auch eine Kombination der erwähnten Mittel 12 verwendet werden und vorteilhaft sein.

Es ist besonders zweckmässig, wenn die Vorrichtung 1 Mittel 24 zur Bestimmung der Durchflussrate **FI_{FZ}** des flüssigen Zusatzmittels 3, beispielsweise ein Durchflussmesser, und Mittel 26 zur Bestimmung des Förderdrucks **P_{FZ}** des flüssigen Zusatzmittels 3, beispielsweise ein Manometer, aufweist.
Weiter ist es von Vorteil, wenn die Vorrichtung 1 Mittel 25 zur Bestimmung der Durchflussrate **FI_{Düse}** des flüssigen Zusatzmittels 3, typischerweise einen Durchflussmesser, von mindestens einer Düse, insbesondere jeder Düse, aufweist.
Weiter ist es von Vorteil, wenn die Vorrichtung 1 Mittel 32 zur Bestimmung der Durchflussrate **FI_{PM}** des pulverförmigen Materials 2, beispielsweise ein Durchflussmesser für pulverförmige Medien, aufweist.

Die Vorrichtung 1 kann weiterhin mindestens ein Regelsystem 11 aufweisen, welches als Messgrösse die Durchflussrate **FI_{FZ}** des flüssigen Zusatzmittels 3 und/oder den Förderdruck **P_{FZ}** des flüssigen Zusatzmittels und/oder die Durchflussrate **FI_{PM}** des pulverförmigen Materials 2 aufweist.
Vorteilhafterweise weist das mindestens eine Regelsystem 11 als Messgrösse den Förderdruck **P_{FZ}** des flüssigen Zusatzmittels auf.
Es ist besonders zweckmässig, wenn das mindestens eine Regelsystem 11 als Regelgrösse mindestens eine Düse 9 zu- oder wegschalten und/oder als Regelgrösse mindestens eine Reinigungsvorrichtung zu- oder wegschalten kann.

Ein Anstieg des Förderdrucks **P_{FZ}** zeigt entweder eine Verstopfung in der Einbringvorrichtung 6 an oder aber einen Anstieg der Durchflussrate **FI_{FZ},** bedingt durch eine Erhöhung der Durchflussrate **FI_{PM}** des pulverförmigen Materials 2.

Vorzugsweise weist das Regelsystem 11 als Messgrösse den Förderdruck **P_{FZ}** des flüssigen Zusatzmittels auf. Durch Verwendung des Förderdrucks **P_{FZ}** des flüssigen Zusatzmittels 3 als Messgrösse kann bei Erreichen eines definierten oberen Förderdrucks **P**_{**FZ** O} gegenüber Normal- bzw. Optimal-Betrieb als Regelgrösse eine weitere Düse 9 zugeschaltet werden (Kaskade), worauf der Förderdruck **P_{FZ}** dank der grösseren Auslassfläche wieder in den Normalwertbereich **P_{FZ opt}** zurückfällt und das Sprühbild bleibt in einem sicheren Bereich. Das heisst unter anderem, dass beispielsweise ein gewollter Flachstrahl nicht als gebündelter Strahl oder unkontrolliertes Sprühbild austritt. Umgekehrt funktioniert es bei Abfall des Förderdrucks **P_{FZ}** analog.
Weiter kann bei Erreichen eines definierten oberen Förderdrucks **P_{FZ O}** gegenüber Normal- bzw. Optimal-Betrieb als Regelgrösse eine Reinigungsvorrichtung 7 zugeschaltet werden, worauf der Förderdruck **P_{FZ}** dank der Entfernung einer Verschmutzung im Falle einer inneren oder äusseren Verschmutzung wieder in den Normalwertbereich **P_{FZ opt}** zurückfällt. Das Fördern von flüssigem Zusatzmittel innerhalb eines Normalwertbereich **P_{FZ opt}** ist dahingehend von Vorteil, dass die Düsen, insbesondere wenn es sich um Flachstrahldüsen handelt, einen Druckbereich, respektive Durchflussbereich aufweisen, in welchen ein optimales Sprühbild gewährleistet ist. Ausserhalb der erwähnten Bereiche kann es beispielsweise zu Verschmutzung der Fördervorrichtung oder der Düsen kommen oder zu einer lokalen Übersättigung mit flüssigem Zusatzmittel 3 in der Förderleitung 5. Dies wäre einem kontrollierbaren Einbringen von flüssigem Zusatzmittel sowie einer homogenen Verteilung des flüssigen Zusatzmittels auf das pulverförmige Material nicht dienlich.
Eine Zugabe des flüssigen Zusatzmittels 3 alleine basierend auf einer Bestimmung der Durchflussrate **FI_{FZ}** des flüssigen Zusatzmittels als Messgrösse wäre auch denkbar (mehr Durchfluss erfordert mehr geöffnete Düsen), dies würde jedoch im Falle einer Verstopfung einer Düse 9 keine weitere Düse zuschalten oder eine Reinigungsvorrichtung zuschalten, worauf die Düsen ausserhalb des Normalwertbereich **P_{FZ opt}** fördern würden. Zusätzlich könnte der Förderdruck **P_{FZ}** soweit ansteigen, dass die Einbringvorrichtung beschädigt würde und die Behandlung des pulverförmigen Materials mit flüssigem Zusatzmittel zum Erliegen käme.

Die Bestimmung des Durchflusses **FI_{PM}** des pulverförmigen Materials 2 kann empirisch oder technisch, beispielsweise durch einen Durchflussmesser für pulverförmige Medien, erfolgen.
Das Massen-Verhältnis von zugegebenem flüssigen Zusatzmittel 3 zu pulverförmigem Material 2 ist typischerweise 1 : 10 - 1 : 1000, insbesondere von 1 : 100 - 1 : 500.
Durch Festlegung eines Maximal-Förderdrucks **P_{FZ max}** des flüssigen Zusatzmittels 3 und ein Abschalten der Förderung des flüssigen Zusatzmittels bei Erreichen des Maximal-Förderdrucks **P_{FZ max}**, beispielsweise bedingt durch eine Verstopfung in der Hauptzuleitung 81, kann eine Beschädigung der Einbringvorrichtung 6 verhindert werden.
Die Bestimmung der Durchflussrate **FI_{Düse}** des flüssigen Zusatzmittels 3, typischerweise unmittelbar vor einer Düse 9, kann mittels einfacher Durchflusssensoren geschehen, die einzig starke Änderungen in der Durchflussrate **FI_{Düse}** erkennen müssen und daher preiswert sind. Die Durchflussrate **FI_{Düse}** kann daher dafür genutzt werden, um innere oder äussere Verschmutzungen der Düsen zu erkennen.
Das Regelsystem 11 kann daher, wie vorhergehend erwähnt, als Regelgrössen auch den Einsatz der Reinigungsvorrichtungen 7 und/oder den Einsatz der Schutzvorrichtungen 13 nutzen. Es ist insbesondere von Vorteil, wenn das Regelsystem 11 als Regelgrössen die erwähnten Vorrichtungen sowie das Zu-, respektive Wegschalten von Düsen 9 nutzt.

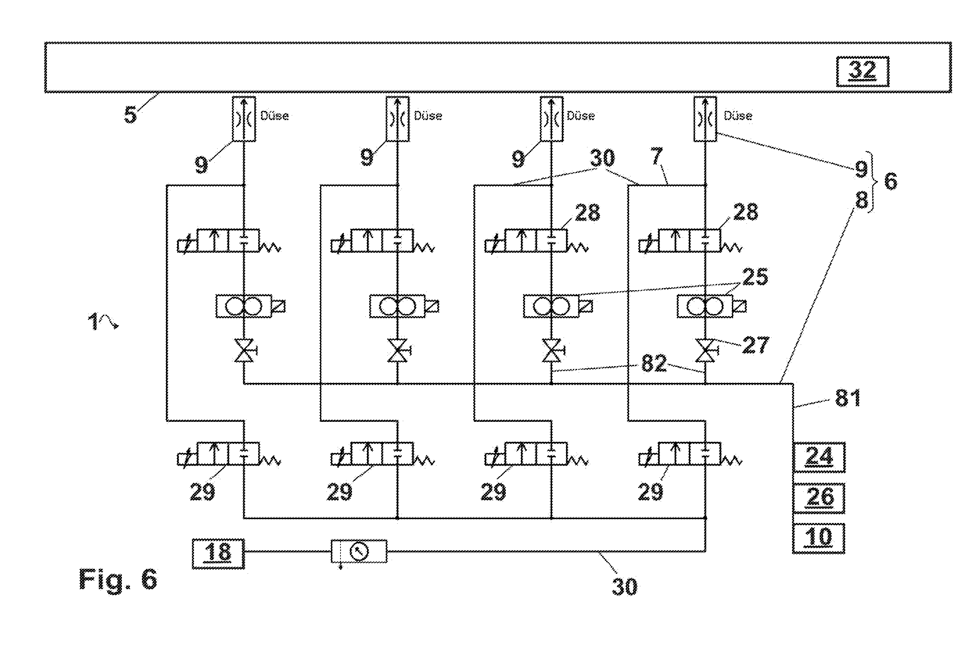

Figur 6 zeigt eine Einbringvorrichtung 6 sowie eine Reinigungsvorrichtung 7, welche als Mittel 12 Druckluft 17 verwendet. Die Einbringvorrichtung 6 umfasst eine Zuleitung 8 bestehend aus einer Hauptzuleitung 81 sowie Nebenzuleitungen 82 und Düsen 9.
Ferner zeigt Figur 6 Mittel zur Bestimmung der Durchflussrate **FI_{FZ}** 24 des flüssigen Zusatzmittels 3, des Förderdrucks **P_{FZ}** 26 des flüssigen Zusatzmittels, der Durchflussrate **FI_{PM}** 32 des pulverförmigen Materials 2, sowie der Durchflussraten **FI_{Düse}** 25. Das Mittel 25 ist typischerweise ein einfacher Durchflusssensor, wie er vorhergehend erwähnt wurde. Die Nebenleitungen 82 weisen weiter ein Ventil 27, typischerweise ein manuell bedienbares Ventil, und ein 1-Wegventil 28 auf.
Die Reinigungsvorrichtung 7 weist Druckluftleitungen 30 auf, welche über 1-Wegventile 29 verfügen und in den Bereich der Nebenzuleitung 82 zwischen Düse und 1-Wegventile 28 Druckluft einbringen können.

Durch die Mittel 25 zur Bestimmung der Durchflussrate **FI_{Düse}** kann eine innere oder äussere Verschmutzung durch den dadurch bedingten Abfall der Durchflussrate **FI_{Düse}** nachgewiesen werden. Das Regelsystem kann einerseits eine zusätzliche Düse zuschalten, um den gewünschten Förderdruck **P_{FZ}** und/oder die gewünschte Durchflussrate **FI_{FZ}** zu gewährleisten, andererseits kann auch die betroffene Nebenzuleitung 82 durch Schliessen des 1-Wegventils 28 geschlossen werden und durch Öffnen des entsprechenden 1-Wegventile 29 Druckluft 17 in die verstopfte Nebenzuleitung 82 gelassen werden, um die Nebenleitung und/oder die Düse zu reinigen.

Weiter umfasst die Erfindung ein Verfahren zum Behandeln, insbesondere Beschichten, von pulverförmigem Material 2 mit mindestens einem flüssigen Zusatzmittel 3, wobei das flüssige Zusatzmittel 3 über eine vorhergehend beschriebene Vorrichtung 1 mit dem pulverförmigen Material 2 in Kontakt gebracht wird.
Insbesondere umfasst das Verfahren die Schritte:
a. Fördern eines pulverförmigen Materials 2 durch eine Förderleitung 5;
b. Besprühen des pulverförmigen Materials 2 mit mindestens einem flüssigen Zusatzmittel 3 in einer Menge, welche proportional zur Durchflussrate **FI_{PM}** des pulverförmigen Materials ist.
   Weiter kann es von Vorteil sein, wenn das Verfahren zusätzlich den folgenden Schritt umfasst:
c. Bestimmen der Durchflussrate **FI_{PM}** des pulverförmigen Materials 2 und/oder Bestimmen von mindestens einem Förderparameter **FP_{FZ}** des flüssigen Zusatzmittels 3, wobei **FP_{FZ}** die beiden Parameter Durchflussrate **FI_{FZ}** des flüssigen Zusatzmittels 3 und Förderdruck **P_{FZ}** des flüssigen Zusatzmittels 3 umfasst.
   Bevorzugt umfasst der Schritt das Bestimmen der Durchflussrate **FI_{PM}** des pulverförmigen Materials 2, Bestimmen der Durchflussrate **FI_{FZ}** des flüssigen Zusatzmittels 3 und Bestimmen des Förderdrucks **P_{FZ}** des flüssigen Zusatzmittels 3.
   Es ist von Vorteil, wenn das Verfahren zusätzlich mindestens einen der folgenden Schritte umfasst:
d. Reinigen von Teilen oder der ganzen Einbringvorrichtung 6 durch die Reinigungsvorrichtung 7, falls mindestens ein Förderparameter **FP_{FZ}** des flüssigen Zusatzmittels 3 einen Grenzwert **FP_{FZ min}** unterschreitet oder einen Grenzwert **FP_{FZ max}** überschreitet, insbesondere falls der Förderdruck **P_{FZ}** des flüssigen Zusatzmittels 3 einen Grenzwert **P_{FZ max}** überschreitet und/oder
e. Reinigen von Teilen oder der ganzen Einbringvorrichtung 6 durch die Reinigungsvorrichtung 7 in regelmässigen Zeitabständen.
   Es ist weiter von Vorteil, wenn das Verfahren zusätzlich mindestens einen der folgenden Schritte umfasst:
f. Anordnen einer weiteren Düse 9 in der Förderleitung 5, falls mindestens ein Förderparameter **FP_{FZ}** des flüssigen Zusatzmittels 3 einen Grenzwert **FP_{FZ min}** unterschreitet oder einen Grenzwert **FP_{FZ max}** überschreitet, insbesondere falls der Förderdruck **P_{FZ}** des flüssigen Zusatzmittels 3 einen Grenzwert **P_{FZ max}** überschreitet und/oder
g. Ersetzen einer Düse 9 in der Förderleitung 5 durch eine andere Düse in der Förderleitung 5, falls mindestens ein Förderparameter **FP_{FZ}** des flüssigen Zusatzmittels 3 einen Grenzwert **FP_{Fz min}** unterschreitet oder einen Grenzwert **FP_{FZ max}** überschreitet, insbesondere falls der Förderdruck **P_{FZ}** des flüssigen Zusatzmittels 3 einen Grenzwert **P_{FZ max}** überschreitet.
   Es ist weiter vorteilhaft, wenn das Verfahren zusätzlich mindestens einen der folgenden Schritte umfasst:
h. Messen der Durchflussrate **FI_{Düse}** der mindestens einen Düse 9, über welche das flüssige Zusatzmittel 3 auf das pulverförmige Material 2 gesprüht wird; und
i. Anordnen der Düse 9 ausserhalb der Förderleitung 5 und/oder Reinigen der erwähnten Düse durch die Reinigungsvorrichtung 7, falls die Düse in Schritt h) einen Grenzwert **FI_{Düse min}** unterschreitet.
   Weiter kann es von Vorteil sein, wenn das Verfahren zusätzlich die folgenden Schritte umfasst:
j. Messen des Förderdrucks **P_{FZ}** des flüssigen Zusatzmittels 3; und
k. Abschalten der Förderung des flüssigen Zusatzmittels 3 bei Erreichen eines Maximal- Förderdrucks **P_{FZ max}**

Die Vorteile der zusätzlichen Schritte wurden vorhergehend beschrieben.

Weiter umfasst die Erfindung die Verwendung einer Vorrichtung 1, wie sie vorhergehend beschrieben wurde, zum Behandeln, insbesondere Beschichten, von pulverförmigem Material 2 mit mindestens einem flüssigen Zusatzmittel 3.

Selbstverständlich ist die Erfindung nicht auf die gezeigten und beschriebenen Ausführungsbeispiele beschränkt.

### Bezugszeichenliste

- 1: Vorrichtung
- 2: Pulverförmiges Material
- 3: Flüssiges Zusatzmittel
- 4: Fördervorrichtung
- 5: Förderleitung
- 6: Einbringvorrichtung
- 7: Reinigungsvorrichtung
- 8: Zuleitung
- 81: Hauptzuleitung
- 82: Nebenzuleitung
- 9: Düsen
- 10: Pumpe
- 11: Regelsystem
- 12: Mittel zum Reinigen der Einbringvorrichtung
- 13: Schutzvorrichtung
- 14: Luftvorhang
- 141: Ausblasvorrichtung des Luftvorhangs
- 15: Bewegliches Formteil
- 16: Austrittsöffnung Düse
- 161: Düsenbohrung
- 17: Druckluft
- 18: Kompressor
- 19: Öffnung in der Förderleitung
- 20: Staub aus pulverförmigem Material
- 21: Innere Verschmutzung
- 22: Druckluftzuleitung
- 23: Druckluftaustrittsöffnung
- 24: Mittel zur Bestimmung der Durchflussrate **FI_{FZ}** des flüssigen Zusatzmittels
- 25: Mittel zur Bestimmung der Durchflussrate **FI_{Düse}** des flüssigen Zusatzmittels der Düse.
- 26: Mittel zur Bestimmung des Förderdrucks **P_{FZ}** des flüssigen Zusatzmittels
- 27: Ventil
- 28: 1-Wegventil Zuleitung
- 29: 1-Wegventil Druckluft
- 30: Druckluftleitung
- 31: Äussere Verschmutzung
- 32: Mittel zur Bestimmung der Durchflussrate **FI_{PM}** des pulverförmigen Materials

## Patentansprüche

1. Vorrichtung (1) zum Behandeln, insbesondere Beschichten, von pulverförmigem Material (2) mit mindestens einem flüssigen Zusatzmittel (3) umfassend eine Fördervorrichtung (4), welche mindestens eine Förderleitung (5) enthält, durch welche das pulverförmige Material (2) gefördert wird, mindestens eine Einbringvorrichtung (6) zum Einbringen des flüssigen Zusatzmittels (3) in die mindestens eine Förderleitung umfassend das pulverförmige Material, **dadurch gekennzeichnet, dass** die Vorrichtung (1) mindestens eine Reinigungsvorrichtung (7) zum Reinigen der Einbringvorrichtung (6) aufweist, sowie dass die Einbringvorrichtung (6) eine Zuleitung (8) und mindestens zwei Düsen (9) umfasst, wobei jeweils über mindestens eine Düse (9) das flüssige Zusatzmittel (3) in die Förderleitung (5) und zum pulverförmigen Material einführbar ist.

2. Vorrichtung gemäss Anspruch 1, **dadurch gekennzeichnet, dass** die Vorrichtung (1) mindestens ein Regelsystem (11) aufweist, welches als Messgrösse die Durchflussrate **FI_{FZ}** des flüssigen Zusatzmittels (3) und/oder den Förderdruck **P_{FZ}** des flüssigen Zusatzmittels (3) und/oder die Durchflussrate **FI_{PM}** des pulverförmigen Materials (2) aufweist.

3. Vorrichtung gemäss einem der vorhergehenden Ansprüche, **dadurch gekennzeichnet, dass** die Vorrichtung (1) Mittel (24) zur Bestimmung der Durchflussrate **FI_{FZ}** des flüssigen Zusatzmittels (3) und Mittel (26) zur Bestimmung des Förderdrucks **P_{FZ}** des flüssigen Zusatzmittels (3) und gegebenenfalls Mittel (32) zur Bestimmung der Durchflussrate **FI_{PM}** des pulverförmigen Materials (2) aufweist.

4. Vorrichtung gemäss einem der vorhergehenden Ansprüche, **dadurch gekennzeichnet, dass** die Reinigungsvorrichtung (7) ein Mittel (12) zum Reinigen der Einbringvorrichtung (6) umfasst, welches ausgewählt ist aus der Gruppe bestehend aus Sieb, Lösungsmittel, Druckluft, mechanisches Werkzeug und Ultraschall, insbesondere Druckluft.

5. Vorrichtung gemäss einem der vorhergehenden Ansprüche, **dadurch gekennzeichnet, dass** die Reinigungsvorrichtung (7) Teile oder die ganze Einbringvorrichtung (6) bei Bedarf und/oder zeitlich permanent oder in regelmässigen Abständen reinigt.

6. Vorrichtung gemäss einem der vorhergehenden Ansprüche, **dadurch gekennzeichnet, dass** mindestens eine der Düsen (9) eine Schutzvorrichtung (13) aufweist, wobei die Schutzvorrichtung (13) in der Förderleitung (5) angeordnet ist.

7. Vorrichtung gemäss Anspruch 6, **dadurch gekennzeichnet, dass** es sich bei der Schutzvorrichtung (13) um eine Abdeckung oder einen Luftvorhang (14), insbesondere einen Luftvorhang, handelt.

8. Vorrichtung gemäss einem der vorhergehenden Ansprüche, **dadurch gekennzeichnet, dass** mindestens eine der Düsen (9) in die Förderleitung (5) hinein und hinaus bewegbar angeordnet ist.

9. Vorrichtung gemäss einem der vorhergehenden Ansprüche, **dadurch gekennzeichnet, dass** mindestens zwei Düsen (9) der Einbringvorrichtung (6) auf einem beweglichen Formteil (15) angeordnet sind, wobei das bewegliche Formteil (15) vorzugsweise rund, oval oder eckig ist.

10. Vorrichtung gemäss einem der vorhergehenden Ansprüche, **dadurch gekennzeichnet, dass** die Förderleitung (5) eine Luftförderrinne ist.

11. Vorrichtung gemäss einem der der vorhergehenden Ansprüche, **dadurch gekennzeichnet, dass** das pulverförmige Material (2) mindestens ein Bindemittel umfasst, vorzugsweise ausgewählt aus der Gruppe bestehend aus Zement, Mörtel, Gips, Silikafume, Flugasche, Schlacke und Hüttensand oder eine Mischung davon.

12. Vorrichtung gemäss einem der der vorhergehenden Ansprüche, **dadurch gekennzeichnet, dass** das mindestens eine flüssige Zusatzmittel (3) ausgewählt ist aus der Gruppe bestehend aus Dispergiermittel, Verflüssiger, Fliessmittel, Verzögerer, Beschleuniger, Stabilisierer, Schwindreduzierer, Luftporenbildner und Korrosionsinhibitor oder eine Mischung davon.

13. Verfahren zum Behandeln, insbesondere Beschichten, von pulverförmigem Material (2) mit mindestens einem flüssigen Zusatzmittel (3), **dadurch gekennzeichnet, dass** das flüssige Zusatzmittel (3) über eine Vorrichtung (1) gemäss einem der vorhergehenden Ansprüche mit dem pulverförmigen Material (2) in Kontakt gebracht wird.

14. Verfahren gemäss Anspruch 13, umfassend die Schritte:
a. Fördern eines pulverförmigen Materials (2) durch eine Förderleitung (5);
b. Besprühen des pulverförmigen Materials (2) mit mindestens einem flüssigen Zusatzmittel (3) in einer Menge, welche proportional zur Durchflussrate **FI_{PM}** des pulverförmigen Materials ist;
und gegebenenfalls
c. Bestimmen der Durchflussrate **FI_{PM}** des pulverförmigen Materials (2) und/oder Bestimmen von mindestens einem Förderparameter **FP_{FZ}** des flüssigen Zusatzmittels (3), wobei **FP_{FZ}** die beiden Parameter Durchflussrate **FI_{FZ}** des flüssigen Zusatzmittels (3) und Förderdruck **P_{FZ}** des flüssigen Zusatzmittels (3) umfasst.

15. Verfahren gemäss Anspruch 14, umfassend die Schritte:
d. Reinigen von Teilen oder der ganzen Einbringvorrichtung (6) durch die Reinigungsvorrichtung (7), falls mindestens ein Förderparameter **FP_{FZ}** des flüssigen Zusatzmittels (3) einen Grenzwert **FP_{FZ min}** unterschreitet oder einen Grenzwert **FP_{FZ max}** überschreitet, insbesondere falls der Förderdruck **P_{FZ}** des flüssigen Zusatzmittels (3) einen Grenzwert **P_{FZ max}** überschreitet und/oder
e. Reinigen von Teilen oder der ganzen Einbringvorrichtung (6) durch die Reinigungsvorrichtung (7) in regelmässigen Zeitabständen.
